# EUROPEAN PATENT APPLICATION

(11) **EP 4 418 023 A1**
(43) Date of publication of application: **21.08.2024**
(21) Application number: 22880621.2
(22) Date of filing: 08.08.2022
(51) Int. Cl.: G02B 6/02, G02B 6/44

(54) **FIBER ASSEMBLY AND METHOD FOR MANUFACTURING FIBER ASSEMBLY**

(30) Priority: 13.10.2021 JP 2021168288
(71) Applicant: Fujikura Ltd., Tokyo 135-8512 (JP)
(72) Inventor: ODA, Takuya, Sakura-shi, Chiba 285-8550 (JP)
(74) Representative: Plasseraud IP
(86) International application number: PCT/JP2022/030311
(87) International publication number: WO 2023/062923

(57) **Abstract**

Provided is a fiber assembly that has a higher degree of freedom in combinations of orientations of multi-core fibers than conventional ones or that is easier to be manufactured than conventional ones. A plurality of multi-core fibers (MF1 to MFna) are bundled such that there exist (i) a multi-core fiber having a first end (σ1) located closer to a first end (z1) of a fiber ribbon (T) and (ii) a multi-core fiber having a second end (o2) located closer to the first end (τ1) of the fiber ribbon (T).

## Description

### Technical Field

The present invention relates to a fiber assembly including a bundle of a plurality of multi-core fibers and a method for manufacturing the fiber assembly.

### Background Art

In the field of optical communications, a multi-core fiber including a plurality of cores is widely used. A document disclosing the multi-core fiber is, for example, Patent Literature 1. A fiber assembly (e.g., a fiber ribbon, a bundle unit, a cable, or a transmission path) including a bundle of a plurality of multi-core fibers is also widely used.

### Citation List

### [Patent Literature]

[Patent Literature 1]
Japanese Patent Application Publication, Tokukai, No. 2019-152866

### Summary of Invention

### Technical Problem

The multi-core fiber may have a marker formed therein, the marker being used to identify the cores. A multi-core fiber in which cores are line-symmetrically arranged and a marker is arranged so as not to overlap the symmetry axis has two kinds of ends (hereinafter, referred to as a "first end" and a "second end") which are distinguishable from each other by a position of the marker relative to the symmetry axis of the cores. Here, in some cases, multi-core fibers in a fiber assembly are bundled so as to satisfy the following condition.

Condition: First ends of the multi-core fibers are located closer to a first end of the fiber assembly and second ends of the multi-core fibers are located closer to a second end of the fiber assembly.

Given that n multi-core fibers are bundled, the number of patterns of combinations of orientations of the multi-core fibers is 2ⁿ. Meanwhile, the number of combinations of orientations of the multi-core fibers satisfying the above condition is only two. That is, conventional fiber assemblies has a quite low degree of freedom in combinations of orientations of the multi-core fibers.

Further, in manufacturing a fiber assembly, each multi-core fiber is typically supplied in a state in which the multi-core fiber is wound around a bobbin or the like. As a method for winding the multi-core fiber, there is one way for winding the multi-core fiber from its first end and another method for winding the multi-core fiber from its second end. In manufacturing a fiber assembly, multi-core fibers should be wound around all bobbins or the like by the same method. Thus, checking and managing the bobbins or the like are difficult. This is a factor that makes it difficult to manufacture the fiber assembly.

Note that such a problem can occur not only in a fiber assembly including a bundle of multi-core fibers each of which has a first end and a second end distinguishable from each other by a position of a marker formed inside a cladding but also in general fiber assemblies including a bundle of multi-core fibers each of which has a first end and a second end distinguishable from each other by an arbitrary means.

An aspect of the present invention was made in consideration of the above problem, and an object of the present invention is to provide a fiber assembly that has a relatively high degree of freedom in combinations of orientations of multi-core fibers or that is relatively easy to be manufactured.

### Solution to Problem

A fiber assembly in accordance with an aspect of the present invention is a fiber assembly including: a cladding, a plurality of cores disposed inside the cladding so as to be arranged line-symmetrically when viewed in a cross section of the multi-core fiber, and a marker arranged inside the cladding such that a center of the marker is positioned at a location that does not overlap a symmetry axis of the plurality of cores when viewed in the cross section of the multi-core fiber, each of the plurality of multi-core fibers having a first end and a second end whose arrangement of the plurality of cores and the marker is in a line symmetric relation with that of the first end, the plurality of multi-core fibers being bundled such that there exist (i) a multi-core fiber having a first end located closer to a first end of the fiber assembly and (ii) a multi-core fiber having a second end closer to the first end of the fiber assembly.

A method in accordance with another aspect of the present invention for manufacturing a fiber assembly is a method for manufacturing a fiber assembly that includes a plurality of multi-core fibers each having a cladding, a plurality of cores disposed inside the cladding so as to be arranged line-symmetrically when viewed in a cross section of the multi-core fiber, and a marker arranged inside the cladding such that the marker is positioned at a location that does not overlap a symmetry axis of the plurality of cores when viewed in the cross section of the multi-core fiber, the method including the steps of: arranging the plurality of multi-core fibers each having a first end and a second end whose arrangement of the plurality of cores and the marker is in a line symmetric relation with that of the first end such that there exist (i) a multi-core fiber having a first end located closer to a first end of the fiber assembly and (ii) a multi-core fiber having a second end closer to the first end of the fiber assembly; and bundling the plurality of multi-core fibers.

### Advantageous Effects of Invention

According to an aspect of the present invention, it is possible to provide a fiber assembly that has a relatively high degree of freedom in combinations of orientations of multi-core fibers or that is relatively easy to be manufactured.

### Brief Description of Drawings

Fig. 1 is a view illustrating a multi-core fiber which is a constituent element of a fiber assembly in accordance with the present invention. In Fig. 1, (a) is a side view of the multi-core fiber, (b) is a front view of one end of the multi-core fiber, and (c) is a front view of the other end of the multi-core fiber.
Fig. 2 is a view illustrating variations of a cross-sectional structure of the multi-core fiber shown in Fig. 1. In Fig. 2, (a) to (f) show front views each illustrating one end of the multi-core fiber.
Fig. 3 is a view illustrating a fiber ribbon that is a specific example of the fiber assembly in accordance with the present invention. In Fig. 3, (a) is a perspective view of the fiber ribbon, and (b) is a front view of one end of the fiber ribbon.
Fig. 4 is a front view of a bundle unit that is a specific example of the fiber assembly in accordance with the present invention.
Fig. 5 is a front view of a cable that is a specific example of the fiber assembly in accordance with the present invention.
Fig. 6 is a front view of a transmission path that is a specific example of the fiber assembly in accordance with the present invention.

### Description of Embodiments

The following description will discuss, with reference to the drawings, a fiber assembly in accordance with an embodiment of the present invention. Note that the fiber assembly is a bundle of a plurality of multi-core fibers. The following description will first discuss a multi-core fiber, which is a constituent element of the fiber assembly, and then will discuss a fiber ribbon, a bundle unit, a cable, and a transmission path, each of which is a specific example of the fiber assembly.

### [Multi-core fiber]

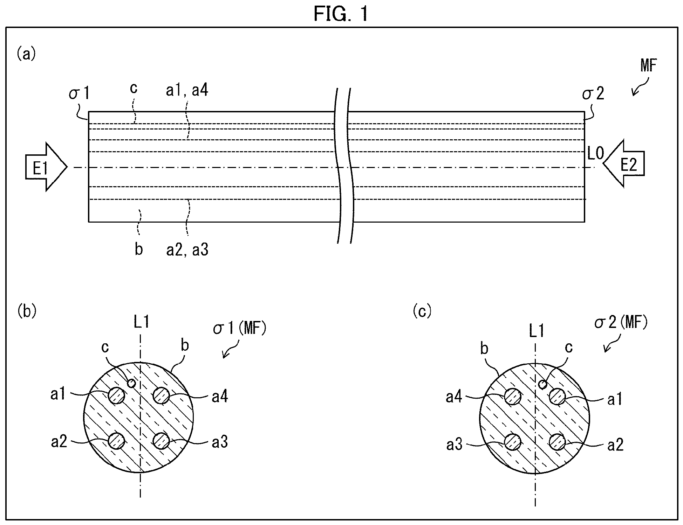

The following will describe a multi-core fiber MF with reference to Fig. 1. In Fig. 1, (a) is a side view of a multi-core fiber MF, (b) is a front view of one end σ1 of the multi-core fiber MF viewed in a direction of a sight line E1, and (c) is a front view of the other end o2 of the multi-core fiber MF viewed in a direction of a sight line E2.

The multi-core fiber MF includes n (n is a natural number of not less than 2) cores a1 to an and a cladding b. The cladding b is a cylindrical member. The cladding b is made of silica glass, for example. Each core ai (i is a natural number of not less than 1 and not more than n) is a cylindrical-shape area that is provided inside the cladding b, that has a higher refractive index than that of the cladding b, and that extends in a direction in which the cladding b extends. Each core ai is made of, for example, silica glass doped with an updopant such as germanium. The cladding b only needs to have a columnar shape, and may have any cross-sectional shape. For example, the cross-sectional shape of the cladding b may be a polygonal shape such as a quadrangular shape or a hexagonal shape, or may be a barrel shape.

In each of the ends σ1 and o2, cores a1 to an are arranged line-symmetrically or so as to be in a line symmetric-like form with respect to an axis L1 orthogonal to a central axis L0 of the multi-core fiber MF. Here, the expression that the cores a1 to an are "arranged line-symmetrically" with respect to the axis L1 means that centers of the cores a1 to an are arranged line-symmetrically with respect to the axis L1. Further, the expression that the cores a1 to an are "arranged so as to be in a line symmetric-like form" with respect to the axis L1 means that, with regard to n points x1, x2, ... , xn arranged line-symmetrically with respect to the axis L1, the core a1 includes the point x1, the core a2 includes the point x2, ... , and the core an includes the point xn. In the ends σ1 and σ2, the cores a1 to an are arranged so as to avoid the axis L1. In other words, in the ends σ1 and σ2, the cores a1 to an are arranged at locations that do not overlap the axis L1. An aspect in which the cores are "arranged so as to be in a line symmetric-like form" includes, as one specific example, an aspect in which the cores are "arranged line-symmetrically".

The multi-core fiber MF further includes a marker c. The marker c is an area that is provided inside the cladding b, that has a different refractive index from that of the cladding b, and that extends in a direction in which the cladding b extends. The marker c may have any cross-sectional shape. For example, the cross-sectional shape of the marker c may be a circular shape, a triangular shape, or a quadrangular shape. The marker c is made of, for example, silica glass doped with a downdopant such as fluorine or boron. In this case, the marker c has a refractive index lower than that of the cladding b. Alternatively, the marker c is made of silica glass doped with an updopant such as germanium, aluminum, phosphorus, or chlorine. In this case, the marker c has a refractive index higher than that of the cladding b. The marker c may be formed by, for example, a drilling process or a stack-and-draw process.

In the ends σ1 and σ2, a center of the marker c is positioned so as to avoid the axis L1. In other words, in each of the ends σ1 and σ2, the center (geometric center) of the marker c is positioned at a location that does not overlap the axis L1. Note that the marker c only needs to be positioned so that the center of the marker c does not overlap the axis L1, and the marker c may partially overlap the axis L1. In a case where the marker c does not overlap the axis L1, it is easy to visually find the position of the marker c. This makes it possible to easily identify the cores a1 to an on the basis of the position of the marker c. In a case where the marker c partially overlaps the axis L1, it is possible to secure a great distance between the marker c and the cores a1 to an. Thus, it is possible to inhibit a phenomenon that the marker c gives an adverse effect on optical characteristics of the cores a1 to an.

Note that, with regard to an arbitrary multi-core fiber MF, arrangement of the cores a1 to an and the marker c in the one end σ1 viewed from the front and arrangement of the cores a1 to an and the marker c in the other end o2 viewed from the front are in a line symmetric relation or in a line symmetric-like relation. Here, the "line symmetric relation" refers to the following relation. That is, when the one end σ1 and the other end o2 are in plane contact with each other, a center of the core a1 in the one end σ1 overlaps a center of the core a1 in the other end o2, a center of the core a2 in the one end σ1 overlaps a center of the core a2 in the other end o2, ... , a center of the core an in the one end σ1 overlaps a center of the core an in the other end o2, and a center of the marker c in the one end σ1 overlaps a center of the marker c in the other end o2. The line symmetric relation is an ideal relation achieved only when (i) a positional relation between the cores a1 to an and the marker c and (ii) sizes and shapes of the cores a1 to an and the marker are strictly maintained along an entire length of the multi-core fiber MF, for example. Meanwhile, the "line symmetric-like relation" refers to the following relation. That is, when the one end σ1 and the other end o2 are in plane contact with each other, the core a1 in the one end σ1 at least partially overlaps the core a1 in the other end σ2, the core a2 in the one end σ1 at least partially overlaps the core a2 in the other end o2, ... , the core an in the one end σ1 at least partially overlaps the core an in the other end σ2, and the marker c in the one end σ1 at least partially overlaps the marker c in the other end o2. The line symmetric-like relation is a realistic relation achieved when (i) a positional relation between the cores a1 to an and the marker c and (ii) sizes and shapes of the cores a1 to an and the marker are not strictly maintained along an entire length of the multi-core fiber MF due to a production error and/or the like, for example. The "line symmetric-like relation" includes, as one specific example, the "line symmetric relation".

### [Variations of cross-sectional structure]

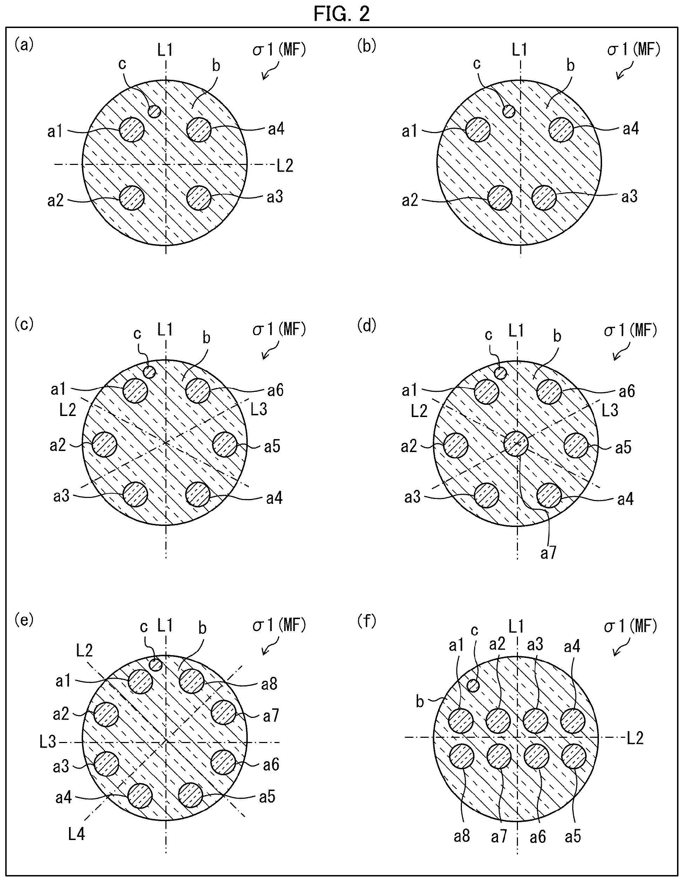

The following description will discuss, with reference to Fig. 2, variations of a cross-sectional structure of the multi-core fiber MF.

(a) of Fig. 2 is a front view of an end σ1 of a multi-core fiber MF in accordance with a first specific example (a specific example shown in Fig. 1). The multi-core fiber MF in accordance with this specific example includes four cores a1 to a4 respectively disposed at apexes of a square. It can be said that these four cores a1 to a4 are arranged (1) line-symmetrically with respect to the above-described axis L1 or (2) line-symmetrically with respect to an axis L2. Here, the axis L2 is an axis orthogonal to the axis L1 in the end σ1 of the multi-core fiber MF. These four cores a1 to a4 are arranged so as to avoid the axes L1 and L2. In other words, the cores a1 to a4 are disposed at locations that do not overlap the axis L1 or L2. In a case where a configuration in which the cores a1 to a4 are arranged on a symmetry axis is allowed, there exist two more axes (not illustrated) making an angle of 45° with respect to the axes L1 and L2.
(b) of Fig. 2 is a front view of an end σ1 of a multi-core fiber MF in accordance with a second specific example. The multi-core fiber MF in accordance with this specific example includes four cores a1 to a4 respectively disposed at apexes of an isosceles trapezoid. It can be said that these four cores a1 to a4 are arranged line-symmetrically with respect to an axis L1. Here, the axis L1 is an axis orthogonal to a central axis of the multi-core fiber MF. These four cores a1 to a4 are arranged so as to avoid the axis L1. In other words, the cores a1 to a4 are disposed at locations that do not overlap the axis L1.
(c) of Fig. 2 is a front view of an end σ1 of a multi-core fiber MF in accordance with a third specific example. The multi-core fiber MF in accordance with this specific example includes six cores a1 to a6 respectively disposed at apexes of a regular hexagon. It can be said that these six cores a1 to a6 are arranged (1) line-symmetrically with respect to an axis L1, (2) line-symmetrically with respect to an axis L2, or (3) line-symmetrically with respect to an axis L3. Here, the axis L1 is an axis orthogonal to a central axis of the multi-core fiber MF. The axis L2 is an axis that makes an angle of 60° with respect to the axis L1 in the end σ1 of the multi-core fiber MF. The axis L3 is an axis that makes an angle of 60° with respect to the axes L1 and L2 in the end σ1 of the multi-core fiber MF. These six cores a1 to a6 are arranged so as to avoid the axes L1, L2, and L3. In other words, the cores a1 to a6 are disposed at locations that do not overlap the axis L1, L2, or L3. In a case where a configuration in which the cores a1 to a6 are arranged on a symmetry axis is allowed, there exist three more axes (not illustrated) each making an angle of 30° with respect to the axis L1, L2, or L3.
(d) of Fig. 2 is a front view of an end σ1 of a multi-core fiber MF in accordance with a fourth specific example. The multi-core fiber MF in accordance with this specific example includes six cores a1 to a6 respectively disposed at apexes of a regular hexagon and one core a7 disposed at a center of the regular hexagon. It can be said that these seven cores a1 to a7 are arranged (1) line-symmetrically with respect to an axis L1, (2) line-symmetrically with respect to an axis L2, or (3) line-symmetrically with respect to an axis L3. Here, the axis L1 is an axis orthogonal to a central axis of the multi-core fiber MF. The axis L2 is an axis that makes an angle of 60° with respect to the axis L1 in the end σ1 of the multi-core fiber MF. The axis L3 is an axis that makes an angle of 60° with respect to the axes L1 and L2 in the end σ1 of the multi-core fiber MF. Among these seven cores a1 to a7, the six cores a1 to a6 respectively disposed at the apexes of the regular hexagon are arranged so as to avoid the axes L1, L2, and L3. In other words, the cores a1 to a6 are disposed at locations that do not overlap the axis L1, L2, or L3. As will be described later, these cores a1 to a6 are suitable for use in input or output of an optical signal. The one core a7 disposed at the center of the regular hexagon is disposed on the axes L1, L2, and L3. The core a7 may be used for input or output of an optical signal, or may be used as a dummy core that does not carry out input or output. Needless to say, if the core a7 is used for input of an optical signal in the end σ1 of the multi-core fiber MF, the core a7 would be used for output of the optical signal in the end o2 of the multi-core fiber MF. Meanwhile, if the core a7 is used for output of an optical signal in the end σ1 of the multi-core fiber MF, the core a7 would be used for input of the optical signal in the end o2 of the multi-core fiber MF. In a case where a configuration in which the cores a1 to a6 are arranged on a symmetry axis is allowed, there exist three more axes (not illustrated) each making an angle of 30° with respect to the axis L1, L2, or L3.
(e) of Fig. 2 is a front view of an end σ1 of a multi-core fiber MF in accordance with a fifth specific example. The multi-core fiber MF in accordance with this specific example includes eight cores a1 to a8 respectively disposed at apexes of a regular octagon. It can be said that these eight cores a1 to a8 are arranged (1) line-symmetrically with respect to an axis L1, (2) line-symmetrically with respect to an axis L2, (3) line-symmetrically with respect to an axis L3, or (4) line-symmetrically with respect to an axis L4. Here, the axis L1 is an axis orthogonal to a central axis of the multi-core fiber MF. The axis L2 is an axis that makes an angle of 45° with respect to the axis L1 in the end σ1 of the multi-core fiber MF. The axis L3 is an axis that makes an angle of 45° with respect to the axis L2 in the end σ1 of the multi-core fiber MF. The axis L4 is an axis that makes an angle of 45° with respect to the axes L3 and L1 in the end σ1 of the multi-core fiber MF. These eight cores a1 to a8 are arranged so as to avoid the axes L1, L2, L3, and L4. In other words, the cores a1 to a8 are disposed at locations that do not overlap the axis L1, L2, L3, or L4. In a case where a configuration in which the cores a1 to a8 are arranged on a symmetry axis is allowed, there exist four more axes (not illustrated) each making an angle of 22.5° with respect to the axis L1, L2, L3, or L4.
(f) of Fig. 2 is a front view of an end σ1 of a multi-core fiber MF in accordance with a sixth specific example. The multi-core fiber MF in accordance with this specific example includes eight cores a1 to a8 arranged in a matrix of two rows and four columns. It can be said that these eight cores a1 to a8 are arranged (1) line-symmetrically with respect to an axis L1 or (2) line-symmetrically with respect to an axis L2. Here, the axis L1 is an axis that is orthogonal to a central axis of the multi-core fiber MF and that is in parallel with a column direction of the cores a1 to a8, whereas the axis L2 is an axis that is orthogonal to the central axis of the multi-core fiber MF and that is in parallel with a row direction of the cores a1 to a8. These eight cores a1 to a8 are arranged so as to avoid the axes L1 and L2. In other words, the cores a1 to a8 are disposed at locations that do not overlap the axis L1 or L2.

### [Fiber ribbon]

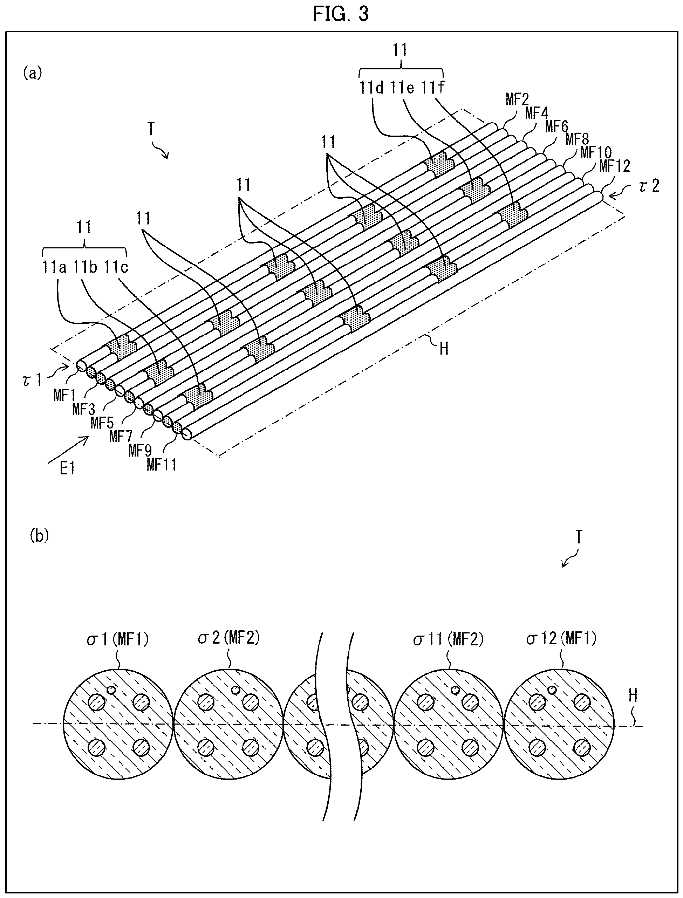

The following will describe a fiber ribbon T with reference to Fig. 3. (a) of Fig. 3 is a perspective view of the fiber ribbon T. (b) of Fig. 3 is a front view of one end τ1 of the fiber ribbon T viewed in a direction of a sight line E1.

The fiber ribbon T is a fiber assembly including a bundle of na multi-core fibers MF1 to MFna. na is a natural number of not less than 2. In the present embodiment, na = 12. Each multi-core fiber MFi (i is a natural number of not less than 1 and not more than na) has a similar configuration to that of the above-described multi-core fiber MF. The multi-core fibers MF1 to MFna are bundled by a plurality of connecting members 11 provided at distances, for example. For example, each of the connecting members 11 is made of a resin material such as an ultraviolet curable resin, and is used to connect two adjacent multi-core fibers MF (e.g., the multi-core fiber MF1 and the multi-core fiber MF2). Note that the multi-core fibers MF1 to MFna may or may not have, in their cross sections, the same arrangement of cores a1 to an and a marker c. The former configuration can provide an effect of making it possible to carry out connection easily, given that a plurality of multi-core fibers constituting a fiber assembly that is to be connected have, in their cross sections, the same arrangement of cores and a marker.

In the fiber ribbon T, na multi-core fibers MF (multi-core fibers MF1 to MFna) are bundled so as to satisfy the following condition α.

Condition α: There exist (i) a multi-core fiber MF having a first end σ1 located closer to a first end τ1 of the fiber ribbon T and a second end o2 located closer to a second end τ2 of the fiber ribbon T and (ii) a multi-core fiber MF having a second end o2 located closer to the first end τ1 of the fiber ribbon T and a first end σ1 located closer to the second end τ2 of the fiber ribbon T.

In the fiber ribbon T illustrated in Fig. 3, each of multi-core fibers MF1, MF5, MF7, MF9, and MF12 is the multi-core fiber MF having the first end σ1 located closer to the first end τ1 of the fiber ribbon T and the second end o2 located closer to the second end τ2 of the fiber ribbon T. Meanwhile, each of multi-core fibers MF2, MF3, MF4, MF6, MF8, MF10, and MF11 is the multi-core fiber MF having the second end o2 located closer to the first end τ1 of the fiber ribbon T and the first end σ1 located closer to the second end τ2 of the fiber ribbon T.

Given that na multi-core fibers MF are bundled so as to satisfy the above-indicated condition α, the number of patterns of orientations of the na multi-core fibers MF realizing the fiber ribbon T is 2^{na}-2. That is, it is possible to realize the fiber ribbon T having a high degree of freedom in combinations of orientations of the na multi-core fibers MF. Further, it is possible to reduce the effort required in manufacturing the fiber ribbon T, specifically, the effort of checking and managing bobbins and/or the like so that all the na multi-core fibers MF of which the fiber ribbon T is made are wound in the same manner. This makes it easier to manufacture the fiber ribbon T. Further, as described above, since the fiber ribbon T has a high degree of freedom in combinations of orientations of the na multi-core fibers MF, the fiber ribbon T eliminates the need to carry out a detailed inspection on an end of an obtained fiber assembly, thereby making it possible to reduce the burden caused by an inspection.

In other words, it is possible to achieve a configuration in which a plurality of fiber ribbons include at least one fiber ribbon in which orientations of first and second ends are not the same but are different. Consequently, it is possible to achieve an effect of making it possible to carry out manufacturing relatively easily or to increase a degree of freedom in combinations of orientations of multi-core fibers in a single fiber ribbon, as compared to a fiber ribbon in which first and second ends face the same orientations.

In the fiber ribbon T shown in Fig. 3, the multi-core fibers MF1 to MFna are bundled so that the markers c of the multi-core fibers MFi are located on the same side relative to an imaginary plane H extending through central axes of the multi-core fibers MFi. Consequently, in rotation adjustment of the multi-core fibers MFi required in connecting the fiber ribbon T to another fiber ribbon, it is possible to reduce an amount of rotation of each multi-core fiber MFi. As a result, in a case where multi-core fibers constituting said another fiber ribbon which is to be connected to the fiber ribbon T are bundled so that their markers are located on the same side relative to an imaginary plane extending through central axes of the multi-core fibers, it is possible to easily connect the fiber ribbon T to said another fiber ribbon.

Note that each of the multi-core fibers MFi constituting the fiber ribbon T may or may not have, on its outer surface, a printed marker indicating that the core arrangement is positive arrangement or reverse arrangement. Here, the expression that the multi-core fiber MFi has positive arrangement means that the first end σ1 of the multi-core fiber MFi is located closer to the first end τ1 of the fiber ribbon T and the second end o2 of the multi-core fiber MFi is located closer to the second end τ2 of the fiber ribbon T. Meanwhile, the expression that the multi-core fiber MFi has reverse arrangement means that the second end o2 of the multi-core fiber MFi is located closer to the first end τ1 of the fiber ribbon T and the first end σ1 of the multi-core fiber MFi is located closer to the second end τ2 of the fiber ribbon T.

Note that the condition α may be replaced with a condition that "there exist (i) a multi-core fiber MF having a first end σ1 located closer to a first end τ1 of the fiber ribbon T and (ii) a multi-core fiber MF having a second end o2 located closer to the first end τ1 of the fiber ribbon T". That is, on the side closer to the second end τ2 of the fiber ribbon T, the na multi-core fibers MF may not be bundled so as to satisfy the condition α.

Note that, with regard to the connecting members 11a to 11c which are closest to the first end τ1 of the fiber ribbon T or the connecting members 11d to 11f which are closest to the second end τ2 of the fiber ribbon T, it is preferable that the below-indicated condition A be satisfied. With this, identifying an orientation of an end of one of multi-core fibers connected by a certain one of the connecting members 11a to 11c allows identification of orientations of ends of the other multi-core fibers connected by the certain one of the connecting members 11a to 11c. Similarly, identifying an orientation of an end of one of multi-core fibers connected by a certain one of the connecting members 11d to 11f allows identification of orientations of ends of the other multi-core fibers connected by the certain one of the connecting members 11d to 11f.

Condition A: Ends of a plurality of multi-core fibers connected by the same connecting member face the same orientation. Here, the expression that the ends of the plurality of multi-core fibers face the same orientation means that the ends of the plurality of multi-core fibers which ends are closer to the first end τ1 of the fiber ribbon T are all (1) on the side closer to the first end σ1 or (2) on the side closer to the second end σ2, the ends of the plurality of multi-core fibers being two ends of each of the plurality of multi-core fibers.

In the specific example shown in Fig. 3, for example, the expression that the above-indicated condition A is satisfied with regard to the first end τ1 of the fiber ribbon T means that (1) the ends of the multi-core fibers MF1 and MF2 connected by the connecting member 11a face the same orientation, (2) the ends of the multi-core fibers MF5 and MF6 connected by the connecting member 11b face the same orientation, and (3) the ends of the multi-core fibers MF9 and MF10 connected by the connecting member 11c face the same orientation.

In a case where the number of multi-core fibers connected by the same connecting member is two, it is possible to provide the above effect even if the ends of the two multi-core fibers face different orientations. The reason is as follows. That is, when an orientation of an end of one of these multi-core fibers is identified, an orientation of an end of the other multi-core fiber can be identified as a reverse orientation.

Further, with regard to the connecting members 11a to 11c which are closest to the first end τ1 of the fiber ribbon T or the connecting members 11d to 11f which are closest to the second end τ2 of the fiber ribbon T, it is preferable that the below-indicated condition B be satisfied. With this, identifying an order of arrangement of orientations of ends of multi-core fibers connected by any one of the connecting members 11a to 11c allows identification of an order of arrangement of orientations of ends of multi-core fibers connected by the other connecting members. Similarly, identifying an order of arrangement of orientations of ends of multi-core fibers connected by any one of the connecting members 11d to 11f allows identification of an order of arrangement of orientations of ends of multi-core fibers connected by the other connecting members.

Condition B: Arrangement orders of orientations of ends of a plurality of multi-core fibers connected by different connecting members are the same.

In the specific example shown in Fig. 3, for example, the expression that the above-indicated condition A is satisfied with regard to the first end τ1 of the fiber ribbon T means that (i) an order of arrangement of orientations of the ends of the multi-core fibers MF1 and MF2 connected by the connecting member 11a, (ii) an order of arrangement of orientations of the ends of the multi-core fibers MF5 and MF6 connected by the connecting member 11b, and (3) an order of arrangement of orientations of the ends of the multi-core fibers MF9 and MF10 connected by the connecting member 11c are the same.

Note that, with regard to the connecting members 11a to 11c which are closest to the first end τ1 of the fiber ribbon T, it is more preferable that both the conditions A and B be satisfied. In this case, identifying an orientation of an end of one of multi-core fibers connected by one of the connecting members 11a to 11c allows identification of orientations of ends of all the multi-core fibers MF1, MF2, MF5, MF6, MF9, and MF10 connected by the connecting members 11a to 11c. Similarly, with regard to the connecting members 11d to 11f which are closest to the second end τ2 of the fiber ribbon T, it is more preferable that both the conditions A and B be satisfied. In this case, identifying an orientation of an end of one of multi-core fibers connected by one of the connecting members 11d to 11f allows identification of orientations of ends of all the multi-core fibers MF1, MF2, MF5, MF6, MF9, and MF10 connected by the connecting members 11d to 11f.

It is preferable that the multi-core fibers MF1 to MFna included in the fiber ribbon T be distinguishable from each other. The reason is that this makes it easy to connect the multi-core fibers MF1 to MFna to their connection destinations properly. Here, a configuration that makes the multi-core fibers MF1 to MFna distinguishable from each other may be arbitrarily selected. For example, the multi-core fibers MF1 to MFn may have claddings of different shapes. This makes it possible to identify the multi-core fibers MF1 to MFn by visual observation. In a case where the multi-core fibers MF1 to MFn are respectively covered with coatings, colors or shapes of the coatings may be changed. Alternatively, different marks, characters, numbers, and/or the like may be formed (e.g., printed) on the coatings. This makes it possible to identify the multi-core fibers MF1 to MFn by visual observation. In a case where the multi-core fibers MF1 to MFn respectively have connectors provided to their ends, colors or shapes (e.g., positions where a key is provided) of the connectors may be changed. Alternatively, different marks, characters, numbers, and/or the like may be formed on the connectors. This makes it possible to identify the multi-core fibers MF1 to MFn by visual observation. In the description below, the structure (the shape of the cladding, the color or shape of the coating, the mark, character, or number formed on the coating, the color or shape of the connector, the mark, character, or number formed on the connector) that makes the multi-core fibers MF1 to MFna included in the fiber ribbon distinguishable from each other will be described as a distinguishing structure.

### [Bundle unit]

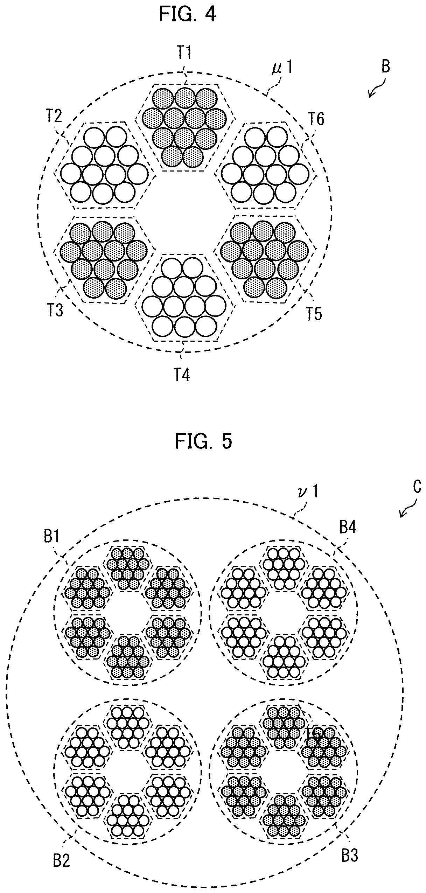

The following will describe a bundle unit B with reference to Fig. 4. Fig. 4 is a front view of the bundle unit B. Fig. 4 shows a front view of, among two ends µ1 and µ2 of the bundle unit B, the end µ1 viewed from the front.

The bundle unit B is a fiber assembly including a bundle of nb fiber ribbons T1 to Tnb. nb is a natural number of not less than 2. In the present embodiment, na = 12 and nb = 6. Each fiber ribbon Tj (j is a natural number of not less than 1 and not more than nb) is configured similarly to the above-described fiber ribbon T. Thus, the bundle unit B can be regarded as a fiber assembly including a bundle of na×nb multi-core fibers MF. For example, the fiber ribbons T1 to Tnb are bundled by two bundle members. Each of the bundle members is a member in the form of thread, string, or tape. A bundle member wound around an upper half of the bundle unit B and a bundle member wound around a lower half of the bundle unit B are entangled with each other at inversion positions. Consequently, the nb fiber ribbons T1 to Tnb are bundled so that the bundle unit B is formed in a substantially columnar shape as a whole. Such a bundle unit B is sometimes called "slot-less type". Alternatively, the fiber ribbons T1 to Tnb are bundled by a slot. The slot is a columnar structure having a side surface provided with a plurality of grooves (for example, see Japanese Patent Application Publication, Tokukai, No. 2022-92835). The fiber ribbons T1 to Tnb are housed in these grooves, respectively. Two or more fiber ribbons may be housed in a single groove. Alternatively, there may be a groove in which no fiber ribbon is housed. Such a bundle unit B is sometimes called "slot type". In the slot type bundle unit, the fiber ribbons are arranged separately in respective different grooves. This provides an advantage of making it easy to identify the fiber ribbons. Further, the slot type bundle unit has a merit of allowing the fiber ribbons to be maintained at constant positions along a longitudinal direction of the bundle unit (preventing replacement of the fiber ribbon with another). Note that the na×nb multi-core fibers MF may or may not have, in their cross sections, the same arrangement of cores a1 to an and a marker c. The former configuration can provide an effect of making it possible to carry out connection easily, given that a plurality of multi-core fibers constituting a fiber assembly that is to be connected have, in their cross sections, the same arrangement of cores and a marker.

In a case where na multi-core fibers MF in any one of the fiber ribbons T1 to Tnb are bundled so as to satisfy the above-indicated condition α, a way of bundling the fiber ribbons T1 to Tnb may be arbitrarily selected. That is, the fiber ribbons T1 to Tn may be bundled so as to satisfy the below-indicated condition β' or so as not to satisfy the below-indicated condition β'. In this case, with regard to the fiber ribbon T including na multi-core fibers MF bundled so as to satisfy the condition α, it is possible to achieve an effect of improving a degree of freedom in combinations of orientations of the multi-core fibers MF. Meanwhile, in a case where the na multi-core fibers MF constituting each fiber ribbon Tj are bundled so as not to satisfy the above-indicated condition α, i.e., in a case where the na multi-core fibers MF constituting each fiber ribbon Tj are bundled so as to satisfy the below-indicated condition α', the fiber ribbons T1 to Tnb are bundled so as to satisfy the below-indicated condition β'.

Condition α': The first ends σ1 of the multi-core fibers MF are located closer to the first end τ1 of the fiber ribbon Tj and the second ends o2 of the multi-core fibers MF are located closer to the second end τ2 of the fiber ribbon Tj.

Condition β': There exist (i) a fiber ribbon T having a first end τ1 located closer to the first end µ1 of the bundle unit B and a second end τ2 located closer to the second end µ2 of the bundle unit B and (ii) a fiber ribbon T having a second end τ2 located closer to the first end µ1 of the bundle unit B and a first end τ1 located closer to the second end µ2 of the bundle unit B.

In the bundle unit B shown in Fig. 4 as an example, 12 multi-core fibers MF constituting each fiber ribbon Tj are bundled so as to satisfy the above-indicated condition α', and the fiber ribbons T1 to T6 constituting the bundle unit B are bundled so as to satisfy the above-indicated condition β'. Here, each of the fiber ribbons T2, T4, and T6 is the fiber ribbon T having the first end τ1 located closer to the first end µ1 of the bundle unit B and the second end τ2 located closer to the second end µ2 of the bundle unit B. Meanwhile, each of the fiber ribbons T1, T3, and T5 is the fiber ribbon T having the second end τ2 located closer to the first end µ1 of the bundle unit B and the first end τ1 located closer to the second end µ2 of the bundle unit B.

Given that nb fiber ribbons T are bundled so as to satisfy the above-indicated condition β', the number of patterns of orientations of the nb fiber ribbons T realizing the bundle unit B is 2^{nb}-2. That is, it is possible to improve the degree of freedom in combinations of orientations of the nb fiber ribbons T realizing the bundle unit B. Further, it is possible to reduce the effort required in manufacturing the bundle unit B, specifically, the effort of checking and managing bobbins and/or the like so that all the nb fiber ribbons T of which the bundle unit B is made are wound in the same manner. This makes it easier to manufacture the bundle unit B. Moreover, when the multi-core fibers MF constituting each fiber ribbon T satisfy the above-indicated condition α', it is possible to easily assign the nb fiber ribbons T to connection destinations in a case where the fiber ribbons T are to be assigned to respective different connection destinations, in particular, in a case where each of the connection destinations requires the multi-core fiber MF to have an end whose marker arrangement is identical to that of the connection destination.

Note that, in a case where (1) na multi-core fibers MF in any one of the fiber ribbons T1 to Tnb are bundled so as to satisfy the above-indicated condition α and (2) na multi-core fibers MF constituting each fiber ribbon Tj are bundled so as to satisfy the above-indicated condition α' and the fiber ribbons T1 to Tnb are bundled so as to satisfy the above-indicated condition β', na×nb multi-core fibers MF constituting the bundle unit B satisfy the below-indicated condition β.

Condition β: There exist (i) a multi-core fiber MF having a first end σ1 located closer to the first end µ1 of the bundle unit B and a second end o2 located closer to the second end µ2 of the bundle unit B and (ii) a multi-core fiber MF having a second end o2 located closer to the first end µ1 of the bundle unit B and a first end σ1 located closer to the second end µ2 of the bundle unit B.

Note that the condition α' may be replaced with a condition that "the first ends σ1 of the multi-core fibers MF are located closer to the first end τ1 of the fiber ribbon Tj". That is, on the side closer to the second end τ2 of each fiber ribbon Ti, the na multi-core fibers MF may not be bundled so as to satisfy the condition α'.

Further, the condition β' may be replaced with a condition that "there exist (i) a fiber ribbon T having a first end τ1 located closer to the first end µ1 of the bundle unit B and (ii) a fiber ribbon T having a second end τ2 located closer to the first end µ1 of the bundle unit B". That is, on the side closer to the second end µ2 of the bundle unit B, the fiber ribbons T1 to Tnb may not be bundled so as to satisfy the condition β'.

Moreover, the condition β may be replaced with a condition that "there exist (i) a multi-core fiber MF having a first end σ1 located closer to the first end µ1 of the bundle unit B and (ii) a multi-core fiber MF having a second end o2 located closer to the first end µ1 of the bundle unit B". That is, on the side closer to the second end µ2 of the bundle unit B, the na×nb multi-core fibers MF may not be bundled so as to satisfy the condition β.

Note that, in the slot type bundle unit, a plurality of multi-core fibers housed in each groove may constitute a fiber ribbon (may be bundled) or may not constitute a fiber ribbon (may not be bundled). In the latter case, the multi-core fibers housed in the single groove are bundled by the groove. Further, the multi-core fibers housed in different grooves are separated from each other by a partition wall that partitions the grooves from each other, and thus would not be mixed.

In a case where the multi-core fibers MF1 to MFna in each of the fiber ribbons T1 to Tnb included in the bundle unit B are distinguishable from each other, it is preferable that, in at least two of the fiber ribbons, multi-core fibers MFi having identical distinguishing structures face the same orientation. With this, identifying orientations of the multi-core fibers MF1 to MFna in one of the at least two fiber ribbons enables to easily identify orientations of the multi-core fibers MF1 to MFna in the others of the at least two fiber ribbons by referring to the distinguishing structures.

In a case where the multi-core fibers MF1 to MFna in each of the fiber ribbons T1 to Tnb included in the bundle unit B are distinguishable from each other, it is preferable that, in all the fiber ribbons T1 to Tnb, multi-core fibers MFi having identical distinguishing structures face the same orientation. With this, identifying orientations of the multi-core fibers MF1 to MFna in one of the two fiber ribbons T1 to Tnb enables to easily identify orientations of the multi-core fibers MF1 to MFna in the others of the fiber ribbons T1 to Tnb by referring to the distinguishing structures.

### [Cable]

The following will describe a cable C with reference to Fig. 5. Fig. 5 is a front view of the cable C. Fig. 5 shows a front view of, among two ends ν1 and ν2 of the cable C, the end ν1 viewed from the front.

The cable C is a fiber assembly including a bundle of nc bundle units B1 to Bnc. nc is a natural number of not less than 2. In the present embodiment, na = 12, nb = 6, and nc = 4. Each bundle unit Bk (k is a natural number of not less than 1 and not more than nc) has a similar configuration to that of the above-described bundle unit B. Thus, the cable C can be regarded as a fiber assembly including a bundle of na×nb×nc multi-core fibers MF. For example, the bundle units B1 to Bnc are bundled by a cylindrical sheath. The cable C configured in this manner may sometimes be called "slot-less type". Alternatively, the bundle units B1 to Bnc are bundled by a slot. The slot is a columnar structure having a side surface provided with a plurality of grooves (for example, see Japanese Patent Application Publication, Tokukai, No. 2022-92835). The bundle units B1 to Bnc are housed in the grooves. Two or more bundle units may be housed in a single groove. Alternatively, there may be a groove in which no fiber ribbon is housed. The cable C configured in this manner may sometimes be called "slot type". In the slot type cable, the bundle units are arranged separately in respective different grooves. This makes it easy to identify the bundle units, advantageously. Further, the slot type cable has a merit of allowing the bundle units to be maintained at constant positions along a longitudinal direction of the cable (preventing replacement of the bundle unit with another). Note that the na×nb×nc multi-core fibers MF may or may not have, in their cross sections, the same arrangement of cores a1 to an and a marker c. The former configuration can provide an effect of making it possible to carry out connection easily, given that a plurality of multi-core fibers constituting a fiber assembly that is to be connected have, in their cross sections, the same arrangement of cores and a marker.

In a case where na×nb multi-core fibers MF in any one of the bundle units B1 to Bn are bundled so as to satisfy the above-indicated condition β, a way of bundling the bundle units B1 to Bnc may be arbitrarily selected. In this case, with regard to the bundle unit B including na×nb multi-core fibers MF bundled so as to satisfy the condition β, it is possible to achieve an effect of improving a degree of freedom in combinations of orientations of the multi-core fibers MF. Meanwhile, in a case where the na×nb multi-core fibers MF constituting the bundle units Bk are bundled so as not to satisfy the above-indicated condition β, i.e., in a case where the na×nb multi-core fibers MF constituting each bundle unit Bk are bundled so as to satisfy the below-indicated condition β", the bundle units B1 to Bnc are bundled so as to satisfy the below-indicated condition γ'.

Condition β": The first ends σ1 of the multi-core fibers MF are located closer to the first end µ1 of the bundle unit Bk and the second ends o2 of the multi-core fibers MF are located closer to the second end µ2 of the bundle unit Bk.

Condition γ': There exist (i) a bundle unit B having a first end µ1 located closer to the first end ν1 of the cable C and a second end µ2 located closer to the second end v2 of the cable C and (ii) a bundle unit B having a second end µ2 located closer to the first end ν1 of the cable C and a first end µ1 located closer to the second end v2 of the cable C.

In the cable C shown in Fig. 5 as an example, 12×6 multi-core fibers MF constituting each bundle unit Bk are bundled so as to satisfy the above-indicated condition β", and the bundle units B1 to B4 constituting the cable C are bundled so as to satisfy the above-indicated condition γ'. Here, each of the bundle units B2 and B4 is the bundle unit B having the first end µ1 located closer to the first end v1 of the cable C and the second end µ2 located closer to the second end v2 of the cable C. Meanwhile, each of the bundle units B1 and B3 is the bundle unit B having the second end µ2 located closer to the first end v1 of the cable C and the first end µ1 located closer to the second end v2 of the cable C.

Given that nc bundle units are bundled so as to satisfy the above-indicated condition γ', the number of patterns of orientations of the nc bundle units B realizing the cable C is 2^{nc}-2. That is, it is possible to improve the degree of freedom in combinations of orientations of the nc bundle units B realizing the cable C. Further, it is possible to reduce the effort required in manufacturing the cable C, specifically, the effort of checking and managing bobbins and/or the like so that all the nc bundle units B of which the cable C is made are wound in the same manner. This makes it easier to manufacture the cable C. Moreover, when the multi-core fibers MF constituting each bundle unit B satisfy the above-indicated condition β", it is possible to easily assign the nc bundle units B to connection destinations in a case where the bundle units B are to be assigned to respective different connection destinations, in particular, in a case where each of the connection destinations requires the multi-core fiber MF to have an end whose marker arrangement is identical to that of the connection destination.

Note that, in a case where (1) na×nb multi-core fibers MF in any one of the bundle units B1 to Bnc are bundled so as to satisfy the above-indicated condition β and (2) na×nb multi-core fibers MF constituting each bundle unit Bk are bundled so as to satisfy the above-indicated condition β" and the bundle units B1 to Bnc are bundled so as to satisfy the above-indicated condition γ', na×nb×nc multi-core fibers MF constituting the cable C satisfy the below-indicated condition γ.

Condition γ: There exist (i) a multi-core fiber MF having a first end σ1 located closer to the first end ν1 of the cable C and a second end o2 located closer to the second end v2 of the cable C and (ii) a multi-core fiber MF having a second end o2 located closer to the first end ν1 of the cable C and a first end σ1 located closer to the second end v2 of the cable C.

Note that the condition β" may be replaced with a condition that "the first ends σ1 of the multi-core fibers MF are located closer to the first end µ1 of the bundle unit Bk". That is, on the side closer to the second end µ2 of each bundle unit Bk, the na×nb multi-core fibers MF may not be bundled so as to satisfy the condition β".

Further, the condition γ' may be replaced with a condition that "there exist (i) a bundle unit B having a first end µ1 located closer to the first end v1 of the cable C and (ii) a bundle unit B having a second end µ2 located closer to the first end v1 of the cable C". That is, on the side closer to the second end v2 of the cable C, the bundle units B1 to Bnc may not be bundled so as to satisfy the condition γ'.

Moreover, the condition γ may be replaced with a condition that "there exist (i) a multi-core fiber MF having a first end σ1 located closer to the first end ν1 of the cable C and (ii) a multi-core fiber MF having a second end o2 located closer to the first end v1 of the cable C". That is, on the side closer to the second end v2 of the cable C, the na×nb×nc multi-core fibers MF may not be bundled so as to satisfy the condition γ.

Note that, in the slot type cable, a plurality of fiber ribbons housed in each groove may constitute a bundle unit (may be bundled) or may not constitute a bundle unit (may not be bundled). In the latter case, the fiber ribbons housed in a single groove are bundled by the groove. Further, the fiber ribbons housed in different grooves are separated from each other by a partition wall that partitions the grooves from each other, and thus would not be mixed.

In a case where the multi-core fibers MF1 to MFna in each of the fiber ribbons T1 to Tnb×nc in the cable C are distinguishable from each other, it is preferable that, in at least two of the fiber ribbons, multi-core fibers MFi having identical distinguishing structures face the same orientation. With this, identifying orientations of the multi-core fibers MF1 to MFna in one of the at least two fiber ribbons enables to easily identify orientations of the multi-core fibers MF1 to MFna in the other(s) of the at least two fiber ribbons by referring to the distinguishing structures. Further, it is preferable that the at least two fiber ribbons be configured such that the multi-core fibers MF1 to MFna are arranged in the same order. For example, assume that one of the at least two fiber ribbons includes the multi-core fibers MF1 to MFna wherein the multi-core fiber MF1 covered with a blue coating, the multi-core fiber MF2 covered with a yellow coating, and the multi-core fiber MF3 covered with a green coating, ... are arranged in this order. In this case, it is preferable that the other(s) of the at least two fiber ribbons also include the multi-core fibers MF1 to MFna arranged in the same order. With this, identifying orientations of the multi-core fibers MF1 to MFna in one of the at least two fiber ribbons enables to easily identify orientations of the multi-core fibers MF1 to MFna in the other(s) of the at least two fiber ribbons on the basis of the order of the arrangement.

Further, in a case where the multi-core fibers MF1 to MFna in each of the fiber ribbons T1 to Tnb×nc in the cable C are distinguishable from each other, it is preferable that, in all the fiber ribbons T1 to Tnb×nc, multi-core fibers MFi having identical distinguishing structures face the same orientation. With this, identifying orientations of the multi-core fibers MF1 to MFna in one of the fiber ribbons T1 to Tnb×nc enables to easily identify orientations of the multi-core fibers MF1 to MFna in the others of the fiber ribbons T1 to Tnb×nc by referring to the distinguishing structures. Further, it is preferable that the fiber ribbons T1 to Tnb×nc be configured such that the multi-core fibers MF1 to MFna are arranged in the same order. For example, assume that one of the fiber ribbons T1 to Tnb×nc includes the multi-core fibers MF1 to MFna wherein the multi-core fiber MF1 covered with a blue coating, the multi-core fiber MF2 covered with a yellow coating, and the multi-core fiber MF3 covered with a green coating, ... are arranged in this order. In this case, it is preferable that the others of the fiber ribbons T1 to Tnb×nc also include the multi-core fibers MF1 to MFna arranged in the same order. With this, if orientations of the multi-core fibers MF1 to MFna in one of the fiber ribbons T1 to Tnb×nc can be identified, it is possible to easily identify orientations of the multi-core fibers MF1 to MFna in the others of the fiber ribbons T1 to Tnb×nc on the basis of the order of the arrangement.

### [Transmission path]

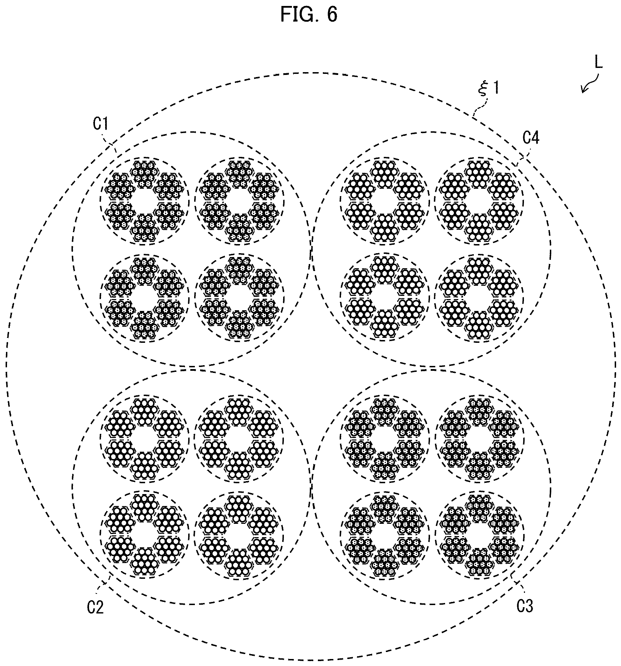

The following will describe a transmission path L with reference to Fig. 6. Fig. 6 is a front view of the transmission path L. Fig. 6 shows a front view of, among two ends §1 and §2 of the transmission path L, the end ξ1 viewed from the front.

The transmission path L is a fiber assembly including a bundle of nd cables C1 to Cnd. nd is a natural number of not less than 2. In the present embodiment, na = 12, nb = 6, nc = 4, and nd = 4. Each cable C1 (1 is a natural number of not less than 1 and not more than nd) has a similar configuration to that of the above-described cable C. Thus, the transmission path L can be regarded as a fiber assembly including a bundle of na×nb×nc×nd multi-core fibers MF. Here, the transmission path L can be realized in the following form. That is, the transmission path L can be realized by the cables C1 to Cnd bundled with a cylindrical duct, a binding band, and/or the like, for example. Further, the transmission path L can be realized by the cables C1 to Cnd buried in the ground and existing in a group. Furthermore, the transmission path L can be realized by the cables C1 to Cnd respectively housed in ducts in a certain duct or stored in a cable rack. Note that the na×nb×nc×nd multi-core fibers MF may or may not have, in their cross sections, the same arrangement of cores a1 to an and a marker c. The former configuration can provide an effect of making it possible to carry out connection easily, given that a plurality of multi-core fibers constituting a fiber assembly that is to be connected have, in their cross sections, the same arrangement of cores and a marker.

In a case where na×nb×nc multi-core fibers MF in any one of the cables C1 to Cnd are bundled so as to satisfy the above-indicated condition γ, a way of bundling the cables C1 to Cnd may be arbitrarily selected. In this case, with regard to the cable C including na×nb×nc multi-core fibers MF bundled so as to satisfy the condition γ, it is possible to achieve an effect of improving a degree of freedom in combinations of orientations of the multi-core fibers MF. Meanwhile, in a case where the na×nb×nc multi-core fibers MF constituting each cable C1 are bundled so as not to satisfy the above-indicated condition γ, i.e., in a case where the na×nb×nc multi-core fibers MF constituting each cable C1 are bundled so as to satisfy the below-indicated condition γ", the cables C1 to Cnd are bundled so as to satisfy the below-indicated condition δ'.

Condition γ": The first ends σ1 of the multi-core fibers MF are located closer to the first end v1 of the cable C1 and the second ends o2 of the multi-core fibers MF are located closer to the second end v2 of the cable C1.

Condition δ': There exist (i) a cable C having a first end v1 located closer to the first end ξ1 of the transmission path L and a second end v2 located closer to the second end §2 of the transmission path L and (ii) a cable C having a second end v2 located closer to the first end ξ1 of the transmission path L and a first end v1 located closer to the second end §2 of the transmission path L.

In the transmission path L shown in Fig. 6 as an example, 12×6×4 multi-core fibers MF constituting each cable C1 are bundled so as to satisfy the above-indicated condition γ", and the cables C1 to C4 constituting the transmission path L are bundled so as to satisfy the above-indicated condition δ'. Here, each of the cables C2 and C4 is the cable C having the first end v1 located closer to the first end ξ1 of the transmission path L and the second end v2 located closer to the second end §2 of the transmission path L. Here, each of the cables C1 and C3 is the cable C having the second end v2 located closer to the first end ξ1 of the transmission path L and the first end v1 located closer to the second end §2 of the transmission path L.

Given that nd cables C are bundled so as to satisfy the above-indicated condition δ', the number of patterns of orientations of the nd cables C realizing the transmission path L is 2^{nd}-2. That is, it is possible to improve the degree of freedom in combinations of orientations of the nd cables C realizing the transmission path C. Further, it is possible to reduce the effort required in manufacturing the transmission path L, specifically, the effort of checking and managing bobbins and/or the like so that all the nd cables C of which the transmission path L is made are wound in the same manner. This makes it easier to manufacture the transmission path L. Moreover, when the multi-core fibers MF constituting each cable C satisfy the above-indicated condition γ", it is possible to easily assign the nd cables C to connection destinations in a case where the cables C are to be assigned to respective different connection destinations, in particular, in a case where each of the connection destinations requires the multi-core fiber MF to have an end whose marker arrangement is identical to that of the connection destination.

Note that, in a case where (1) na×nb×nc multi-core fibers MF in any one of the cables C1 to Cnd are bundled so as to satisfy the above-indicated condition γ and (2) na×nb×nc multi-core fibers MF constituting each cable C are bundled so as to satisfy the above-indicated condition γ" and the cables C1 to Cnd are bundled so as to satisfy the above-indicated condition δ', na×nb×nc×nd multi-core fibers MF constituting the transmission path L satisfy the below-indicated condition δ.

Condition δ: There exist (i) a multi-core fiber MF having a first end σ1 located closer to the first end ζ1 of the transmission path L and a second end o2 located closer to the second end §2 of the transmission path L and (ii) a multi-core fiber MF having a second end o2 located closer to the first end ζ1 of the transmission path L and a first end σ1 located closer to the second end §2 of the transmission path L.

Note that the condition γ" may be replaced with a condition that "the first ends σ1 of the multi-core fibers MF are located closer to the first end v1 of the cable Cl". That is, on the side closer to the second end v2 of each cable C1, the na×nb×nc multi-core fibers MF may not be bundled so as to satisfy the condition γ".

Further, the condition δ' may be replaced with a condition that "there exist (i) a cable C having a first end v1 located closer to the first end ξ1 of the transmission path L and (ii) a cable C having a second end v2 located closer to the first end ξ1 of the transmission path L". That is, on the side closer to the second end §2 of the transmission path L, the cables C1 to Cnd may not be bundled so as to satisfy the condition δ'.

Moreover, the condition δ may be replaced with a condition that "there exist (i) a multi-core fiber MF having a first end σ1 located closer to the first end ξ1 of the transmission path L and (ii) a multi-core fiber MF having a second end o2 located closer to the first end ξ1 of the transmission path L". That is, on the side closer to the second end §2 of the transmission path L, the na×nb×nc×nd multi-core fibers MF may not be bundled so as to satisfy the condition δ.

### (Summary 1)

A fiber assembly in accordance with a first aspect of the present invention includes: a plurality of multi-core fibers each having a first end which is designated as one end and a second end which is designated as the other end, the first end and the second end being distinguishable from each other, the plurality of multi-core fibers being bundled such that there exist (i) a multi-core fiber having a first end located closer to a first end of the fiber assembly and (ii) a multi-core fiber having a second end located closer to the first end of the fiber assembly.

A fiber assembly in accordance with a second aspect of the present invention has the configuration of the first aspect and is configured such that: each of the plurality of multi-core fibers includes a cladding, a plurality of cores disposed inside the cladding so as to be arranged in a line symmetric-like form when viewed in a cross section of the multi-core fiber, and a marker arranged inside the cladding such that a center of the marker is positioned at a location that does not overlap a symmetry axis of the plurality of cores when viewed in the cross section of the multi-core fiber; and the first end and the second end of each of the plurality of multi-core fibers are distinguishable from each other by a position of the marker relative to the symmetry axis.

A fiber assembly in accordance with a third aspect of the present invention has the configuration of the first or second aspect and is configured such that: at least part of the plurality of multi-core fibers are bundled so as to constitute a single fiber ribbon.

A fiber assembly in accordance with a fourth aspect of the present invention has the configuration of the first or second aspect and is configured such that: the plurality of multi-core fibers are bundled so as to constitute a plurality of fiber ribbons; and at least part of the plurality of fiber ribbons are bundled so as to constitute a single bundle unit.

A fiber assembly in accordance with a fifth aspect of the present invention has the configuration of the fourth aspect and is configured such that: multi-core fibers constituting each of the plurality of fiber ribbons are bundled such that first ends of the multi-core fibers are located closer to a first end of said each of the plurality of fiber ribbons; and the plurality of fiber ribbons are bundled such that there exist (i) a fiber ribbon having a first end located closer to a first end of the bundle unit and (ii) a fiber ribbon having a second end located closer to the first end of the bundle unit.

A fiber assembly in accordance with a sixth aspect of the present invention has the configuration of the first or second aspect and is configured such that: the plurality of fiber ribbons are bundled so as to constitute a plurality of bundle units; and at least part of the plurality of bundle units are bundled so as to constitute a single cable.

A fiber assembly in accordance with a seventh aspect of the present invention has the configuration of the sixth aspect and is configured such that: multi-core fibers constituting each of the plurality of bundle units are bundled such that first ends of the multi-core fibers are located closer to a first end of said each of the plurality of bundle units; and the plurality of bundle units are bundled such that there exist (i) a bundle unit having a first end located closer to a first end of the cable and (ii) a bundle unit having a second end located closer to the first end of the cable.

A fiber assembly in accordance with an eighth aspect of the present invention has the configuration of the first or second aspect and is configured such that: the plurality of multi-core fibers are bundled so as to constitute a plurality of fiber ribbons; the plurality of fiber ribbons are bundled so as to constitute a plurality of bundle units; the plurality of bundle units are bundled so as to constitute a plurality of cables; and at least part of the plurality of cables are bundled so as to constitute a single transmission path.

A fiber assembly in accordance with a ninth aspect of the present invention includes the configuration of the fourth, sixth, or eighth aspect and is configured such that: multi-core fibers constituting at least one fiber ribbon are bundled such that there exist (i) a multi-core fiber having a first end located closer to a first end of the at least one fiber ribbon and (ii) a multi-core fiber having a second end located closer to the first end of the at least one fiber ribbon.

A fiber assembly in accordance with a tenth aspect of the present invention includes the configuration of the configuration of the sixth or eighth aspect and is configured such that: multi-core fibers constituting at least one bundle unit are bundled such that there exist (i) a multi-core fiber having a first end located closer to a first end of the at least one bundle unit and (ii) a multi-core fiber having a second end located closer to the first end of the at least one bundle unit.

A fiber assembly in accordance with an eleventh aspect of the present invention has the configuration of any one of the third to tenth aspects and is configured such that: each of the plurality of multi-core fibers includes a cladding, a plurality of cores disposed inside the cladding so as to be arranged in a line symmetric-like form when viewed in a cross section of the multi-core fiber, and a marker arranged inside the cladding such that a center of the marker is positioned at a location that does not overlap a symmetry axis of the plurality of cores when viewed in the cross section of the multi-core fiber; the first end and the second end of each of the plurality of multi-core fibers are distinguishable from each other by a position of the marker relative to the symmetry axis; and the plurality of multi-core fibers constituting the single fiber ribbon or each of the plurality of fiber ribbons are bundled such that the markers of the plurality of multi-core fibers are located on a same side relative to an imaginary plane extending through central axes of the plurality of multi-core fibers at least on a first end of the single fiber ribbon or the one of the plurality of fiber ribbons.

A fiber assembly in accordance with a twelfth aspect of the present invention has the configuration of any one of the third to eleventh aspects and is configured such that: the plurality of multi-core fibers constituting the single fiber ribbon or each of the plurality of fiber ribbons are bundled with use of a plurality of connecting members disposed at distances; and (i) ends of a plurality of multi-core fibers connected by a same one of some of the plurality of connecting members which are closest to the first end of the fiber assembly face a same orientation or (ii) ends of a plurality of multi-core fibers connected by a same one of some of the plurality of connecting members which are closest to the second end of the fiber assembly face a same orientation, or (i) ends of a plurality of multi-core fibers connected by different ones of some of the plurality of connecting members which are closest to the first end of the fiber assembly are arranged in a same order or (ii) ends of a plurality of multi-core fibers connected by different ones of some of the plurality of connecting members which are closest to the second end of the fiber assembly are arranged in a same order.

A fiber assembly in accordance with a thirteenth aspect of the present invention has the configuration of any one of the fourth to twelfth aspects and is configured such that: each of at least two of the plurality of fiber ribbons has a plurality of multi-core fibers each having a distinguishing structure with which the plurality of multi-core fibers are distinguishable from each other; and with regard to at least one type of distinguishing structure, multi-core fibers included in the at least two fiber ribbons which multi-core fibers have the at least one type of distinguishing structure face the same orientation.

A fiber assembly in accordance with a fourteenth aspect of the present invention has the configuration of the thirteenth aspect and is configured such that: at least two of the plurality of fiber ribbons are configured such that multi-core fibers included in the at least two fiber ribbons are arranged in a same order.

A method in accordance with a fifteenth aspect of the present invention for manufacturing a fiber assembly is a method for manufacturing a fiber assembly that includes a plurality of multi-core fibers each having a first end which is designated as one end and a second end which is designated as the other end, the first end and the second end being distinguishable from each other, the method comprising the steps of: arranging the plurality of multi-core fibers such that there exist (i) a multi-core fiber having a first end located closer to a first end of the fiber assembly and (ii) a multi-core fiber having a second end located closer to the first end of the fiber assembly; and bundling the plurality of multi-core fibers.

### (Summary 2)

A fiber assembly in accordance with a first aspect of the present invention is a fiber assembly including a plurality of multi-core fibers each having a cladding, a plurality of cores disposed inside the cladding so as to be arranged line-symmetrically when viewed in a cross section of the multi-core fiber, and a marker arranged inside the cladding such that a center of the marker is positioned at a location that does not overlap a symmetry axis of the plurality of cores when viewed in the cross section of the multi-core fiber, each of the plurality of multi-core fibers having a first end and a second end whose arrangement of the plurality of cores and the marker is in a line symmetric relation with that of the first end, the plurality of multi-core fibers being bundled such that there exist (i) a multi-core fiber having a first end located closer to a first end of the fiber assembly and (ii) a multi-core fiber having a second end closer to the first end of the fiber assembly.

A fiber assembly in accordance with a second aspect of the present invention employs, in addition to the configuration of the first aspect, a configuration in which: at least part of the plurality of multi-core fibers are bundled so as to constitute a single fiber ribbon.

A fiber assembly in accordance with a third aspect of the present invention employs, in addition to the configuration of the first aspect, a configuration in which: the plurality of multi-core fibers are bundled so as to constitute a plurality of fiber ribbons; and at least part of the plurality of fiber ribbons are bundled so as to constitute a single bundle unit.

A fiber assembly in accordance with a fourth aspect of the present invention employs, in addition to the configuration of the third aspect, a configuration in which: the multi-core fibers constituting each of the plurality of fiber ribbons are bundled such that first ends of the multi-core fibers are located closer to a first end of said each of the plurality of fiber ribbons; and the plurality of fiber ribbons are bundled such that there exist (i) a fiber ribbon having a first end located closer to a first end of the bundle unit and (ii) a fiber ribbon having a second end located closer to the first end of the bundle unit.

A fiber assembly in accordance with a fifth aspect of the present invention employs, in addition to the configuration of the first aspect, a configuration in which: the plurality of multi-core fibers are bundled so as to constitute a plurality of fiber ribbons; the plurality of fiber ribbons are bundled so as to constitute a plurality of bundle units; and at least part of the plurality of bundle units are bundled so as to constitute a single the plurality of bundle units are bundled so as to constitute a single cable.

A fiber assembly in accordance with a sixth aspect of the present invention employs, in addition to the configuration of the fifth aspect, a configuration in which: the multi-core fibers constituting each of the plurality of bundle units are bundled such that first ends of the multi-core fibers are located closer to a first end of said each of the plurality of bundle units; and the plurality of bundle units are bundled such that there exist (i) a bundle unit having a first end located closer to a first end of the cable and (ii) a bundle unit having a second end located closer to the first end of the cable.

A fiber assembly in accordance with a seventh aspect of the present invention employs, in addition to the configuration of the first aspect, a configuration in which: the plurality of multi-core fibers are bundled so as to constitute a plurality of fiber ribbons; the plurality of fiber ribbons are bundled so as to constitute a plurality of bundle units; the plurality of bundle units are bundled so as to constitute a plurality of cables; and at least part of the plurality of cables are bundled so as to constitute a single transmission path.

A fiber assembly in accordance with an eighth aspect of the present invention employs, in addition to the configuration of the seventh aspect, a configuration in which: the multi-core fibers constituting each of the plurality of cables are bundled such that first ends of the multi-core fibers are located closer to a first end of said each of the plurality of cables; and the plurality of cables are bundled such that there exist (i) a cable having a first end located closer to a first end of the transmission path and (ii) a cable having a second end located closer to the first end of the transmission path.

A fiber assembly in accordance with a ninth aspect of the present invention employs, in addition to the configuration of the third, fifth, or seventh aspect, a configuration in which: multi-core fibers constituting at least one fiber ribbon are bundled such that there exist (i) a multi-core fiber having a first end located closer to a first end of the at least one fiber ribbon and (ii) a multi-core fiber having a second end located closer to the first end of the at least one fiber ribbon.

A fiber assembly in accordance with a tenth aspect of the present invention employs, in addition to the configuration of the configuration of the fifth or seventh aspect, a configuration in which: multi-core fibers constituting at least one bundle unit are bundled such that there exist (i) a multi-core fiber having a first end located closer to a first end of the at least one bundle unit and (ii) a multi-core fiber having a second end located closer to the first end of the at least one bundle unit.

A fiber assembly in accordance with an eleventh aspect of the present invention employs, in addition to the configuration of the seventh aspect, a configuration in which: multi-core fibers constituting at least one cable are bundled such that there exist (i) a multi-core fiber having a first end located closer to a first end of the transmission path and (ii) a multi-core fiber having a second end located closer to the first end of the transmission path.

A fiber assembly in accordance with a twelfth aspect of the present invention employs, in addition to the configuration of any one of the second to eleventh aspects, a configuration in which: the plurality of multi-core fibers constituting the single fiber ribbon or each of the plurality of fiber ribbons are bundled such that the markers of the plurality of multi-core fibers are located on a same side relative to an imaginary plane extending through central axes of the plurality of multi-core fibers at least on a first end of the single fiber ribbon or the one of the plurality of fiber ribbons.

A fiber assembly in accordance with a thirteenth aspect of the present invention employs, in addition to the configuration of any one of the first to twelfth aspects, a configuration in which: the plurality of multi-core fibers have, in their first ends and second ends, a same arrangement of the cores and marker.

A fiber assembly in accordance with a fourteenth aspect of the present invention employs, in addition to the configuration of any one of the first to thirteenth aspects, a configuration in which: in each of the plurality of multi-core fibers, the marker is arranged so as not to overlap a symmetry axis of the plurality of cores.

A method in accordance with a fifteenth aspect of the present invention for manufacturing a fiber assembly is a method for manufacturing a fiber assembly that includes a plurality of multi-core fibers each having a cladding, a plurality of cores disposed inside the cladding so as to be arranged line-symmetrically when viewed in a cross section of the multi-core fiber, and a marker arranged inside the cladding such that the marker is positioned at a location that does not overlap a symmetry axis of the plurality of cores when viewed in the cross section of the multi-core fiber, the method including the steps of: arranging the plurality of multi-core fibers each having a first end and a second end whose arrangement of the plurality of cores and the marker is in a line symmetric relation with that of the first end such that there exist (i) a multi-core fiber having a first end located closer to a first end of the fiber assembly and (ii) a multi-core fiber having a second end closer to the first end of the fiber assembly; and bundling the plurality of multi-core fibers.

### [Supplementary remarks]

The present invention is not limited to any of the above-described embodiments, but can be altered by a skilled person in the art within the scope of the claims. The present invention also encompasses, in its technical scope, any embodiment derived by combining technical means disclosed in differing embodiments. For example, one or both of the ends of the fiber assembly may be provided with a connector or a fan-in/fan-out device. Further, the scope of the present invention also includes a method for manufacturing the above-described fiber assembly, for example, a method for manufacturing a fiber assembly, the method including the steps of: arranging the plurality of multi-core fibers such that there exist (i) a multi-core fiber having a first end located closer to a first end of the fiber assembly and (ii) a multi-core fiber having a second end located closer to the first end of the fiber assembly; and bundling the plurality of multi-core fibers. Moreover, the fiber ribbon does not need to be constituted only by multi-core fibers. Alternatively, the fiber ribbon may be constituted by a multi-core fiber and a single-core fiber. Similarly, the bundle unit does not need to be constituted only by multi-core fibers. Alternatively, the bundle unit may be constituted by a multi-core fiber and a single-core fiber. Similarly, the transmission path does not need to be constituted only by multi-core fibers. Alternatively, the transmission path may be constituted by a multi-core fiber and a single-core fiber.

The foregoing embodiments have dealt with a fiber assembly including a bundle of multi-core fibers each of which has a first end and a second end being distinguishable from each other by a position of a marker formed inside a cladding. However, the present invention is not limited to this. For example, the scope of the present invention also encompass a fiber assembly including a bundled of multi-core fibers each having a first end and a second end being distinguishable from each other by a cross-sectional shape of a cladding. In this case, the cross-sectional shape of the cladding may be formed so as to be asymmetric with respect to a symmetry axis of the cores. In an example, the cladding may be formed to have a cross-sectional shape in the shape of "D". For another example, the scope of the present invention also encompass a fiber assembly including a bundled of multi-core fibers each having a first end and a second end being distinguishable from each other by shapes of connectors. In this case, the shapes of the connectors provided to the ends of each multi-core fiber may be formed so as to be asymmetric with respect to a symmetry axis of the cores. For example, a key provided on a surface of each connector may be positioned at a location which does not overlap a symmetry axis of the cores. For further another example, the scope of the present invention also encompass a fiber assembly including a bundled of multi-core fibers each having a first end and a second end being distinguishable from each other by a positon of a mark formed (e.g., printed) on a surface of a cladding or a coating covering the surface of the cladding. In this case, the mark may be formed so that its center (a center of the mark) does not overlap a symmetry axis of the cores.

### Reference Signs List

MF, MF1 to MFna: multi-core fiber
a1 to an: core
b: cladding
c: marker
T, T1 to Tnb: fiber ribbon
B, B1 to Bnc: bundle unit
C, C1 to Cnd: cable
L: transmission path

## Claims

1. A fiber assembly comprising:
a plurality of multi-core fibers each having a first end which is designated as one end and a second end which is designated as the other end, the first end and the second end being distinguishable from each other,
the plurality of multi-core fibers being bundled such that there exist (i) a multi-core fiber having a first end located closer to a first end of the fiber assembly and (ii) a multi-core fiber having a second end located closer to the first end of the fiber assembly.

2. The fiber assembly according to claim 1, wherein:
each of the plurality of multi-core fibers includes
a cladding,
a plurality of cores disposed inside the cladding so as to be arranged in a line symmetric-like form when viewed in a cross section of the multi-core fiber, and
a marker arranged inside the cladding such that a center of the marker is positioned at a location that does not overlap a symmetry axis of the plurality of cores when viewed in the cross section of the multi-core fiber; and
the first end and the second end of each of the plurality of multi-core fibers are distinguishable from each other by a position of the marker relative to the symmetry axis.

3. The fiber assembly according to claim 1 or 2, wherein:
at least part of the plurality of multi-core fibers are bundled so as to constitute a single fiber ribbon.

4. The fiber assembly according to claim 1 or 2, wherein:
the plurality of multi-core fibers are bundled so as to constitute a plurality of fiber ribbons; and
at least part of the plurality of fiber ribbons are bundled so as to constitute a single bundle unit.

5. The fiber assembly according to claim 4, wherein:
multi-core fibers constituting each of the plurality of fiber ribbons are bundled such that first ends of the multi-core fibers are located closer to a first end of said each of the plurality of fiber ribbons; and
the plurality of fiber ribbons are bundled such that there exist (i) a fiber ribbon having a first end located closer to a first end of the bundle unit and (ii) a fiber ribbon having a second end located closer to the first end of the bundle unit.

6. The fiber assembly according to claim 1 or 2, wherein:
the plurality of multi-core fibers are bundled so as to constitute a plurality of fiber ribbons;
the plurality of fiber ribbons are bundled so as to constitute a plurality of bundle units; and
at least part of the plurality of bundle units are bundled so as to constitute a single cable.

7. The fiber assembly according to claim 6, wherein:
multi-core fibers constituting each of the plurality of bundle units are bundled such that first ends of the multi-core fibers are located closer to a first end of said each of the plurality of bundle units; and
the plurality of bundle units are bundled such that there exist (i) a bundle unit having a first end located closer to a first end of the cable and (ii) a bundle unit having a second end located closer to the first end of the cable.

8. The fiber assembly according to claim 1 or 2, wherein:
the plurality of multi-core fibers are bundled so as to constitute a plurality of fiber ribbons;
the plurality of fiber ribbons are bundled so as to constitute a plurality of bundle units;
the plurality of bundle units are bundled so as to constitute a plurality of cables; and
at least part of the plurality of cables are bundled so as to constitute a single transmission path.

9. The fiber assembly according to claim 4, 6, or 8, wherein:
multi-core fibers constituting at least one fiber ribbon are bundled such that there exist (i) a multi-core fiber having a first end located closer to a first end of the at least one fiber ribbon and (ii) a multi-core fiber having a second end located closer to the first end of the at least one fiber ribbon.

10. The fiber assembly according to claim 6 or 8, wherein:
multi-core fibers constituting at least one bundle unit are bundled such that there exist (i) a multi-core fiber having a first end located closer to a first end of the at least one bundle unit and (ii) a multi-core fiber having a second end located closer to the first end of the at least one bundle unit.

11. The fiber assembly according to any one of claims 3 to 10, wherein:
each of the plurality of multi-core fibers includes
a cladding,
a plurality of cores disposed inside the cladding so as to be arranged in a line symmetric-like form when viewed in a cross section of the multi-core fiber, and
a marker arranged inside the cladding such that a center of the marker is positioned at a location that does not overlap a symmetry axis of the plurality of cores when viewed in the cross section of the multi-core fiber;
the first end and the second end of each of the plurality of multi-core fibers are distinguishable from each other by a position of the marker relative to the symmetry axis; and
the plurality of multi-core fibers constituting the single fiber ribbon or each of the plurality of fiber ribbons are bundled such that the markers of the plurality of multi-core fibers are located on a same side relative to an imaginary plane extending through central axes of the plurality of multi-core fibers at least on a first end of the single fiber ribbon or the one of the plurality of fiber ribbons.

12. The fiber assembly according to any one of claims 3 to 11, wherein:
the plurality of multi-core fibers constituting the single fiber ribbon or each of the plurality of fiber ribbons are bundled with use of a plurality of connecting members disposed at distances; and
(i) ends of a plurality of multi-core fibers connected by a same one of some of the plurality of connecting members which are closest to the first end of the fiber assembly face a same orientation or (ii) ends of a plurality of multi-core fibers connected by a same one of some of the plurality of connecting members which are closest to the second end of the fiber assembly face a same orientation, or
(i) ends of a plurality of multi-core fibers connected by different ones of some of the plurality of connecting members which are closest to the first end of the fiber assembly are arranged in a same order or (ii) ends of a plurality of multi-core fibers connected by different ones of some of the plurality of connecting members which are closest to the second end of the fiber assembly are arranged in a same order.

13. The fiber assembly according to any one of claims 4 to 12, wherein:
each of at least two of the plurality of fiber ribbons has a plurality of multi-core fibers each having a distinguishing structure with which the plurality of multi-core fibers are distinguishable from each other; and
with regard to at least one type of distinguishing structure, multi-core fibers included in the at least two fiber ribbons which multi-core fibers have the at least one type of distinguishing structure face the same orientation.

14. The fiber assembly according to any one of claim 13, wherein:
at least two of the plurality of fiber ribbons are configured such that multi-core fibers included in the at least two fiber ribbons are arranged in a same order.

15. A method for manufacturing a fiber assembly that includes a plurality of multi-core fibers each having a first end which is designated as one end and a second end which is designated as the other end, the first end and the second end being distinguishable from each other, the method comprising the steps of:
arranging the plurality of multi-core fibers such that there exist (i) a multi-core fiber having a first end located closer to a first end of the fiber assembly and (ii) a multi-core fiber having a second end located closer to the first end of the fiber assembly; and
bundling the plurality of multi-core fibers.
